# EUROPÄISCHE PATENTSCHRIFT

(11) **EP 1 702 395 B1**
(45) Veröffentlichungstag und Bekanntmachung des Hinweises auf die Patenterteilung: **15.06.2011**
(21) Anmeldenummer: 04789933.1
(22) Anmeldetag: 21.10.2004
(51) Int. Cl.: H02K 1/06, H02K 1/18, H02K 15/02, H02K 1/16

(54) **VERFAHREN ZUM HERSTELLEN EINES STÄNDERS SOWIE EIN DANACH HERGESTELLTER STÄNDER**
METHOD FOR THE PRODUCTION OF A STATOR AND STATOR PRODUCED ACCORDING THERETO
PROCEDE DE FABRICATION D'UN STATOR ET STATOR AINSI FABRIQUE

(30) Priorität: 30.12.2003 DE 10361857
(43) Veröffentlichungstag der Anmeldung: 20.09.2006
(73) Patentinhaber: Robert Bosch GmbH, 70442 Stuttgart (DE)
(72) Erfinder: RAU, Eberhard, 70825 Korntal-Muenchingen (DE); BERGER, Thomas, 71254 Ditzingen (DE); HENNE, Martin, 71696 Moeglingen (DE); PFLUEGER, Klaus, 71735 Eberdingen (DE)
(86) Internationale Anmeldenummer: PCT/DE2004/002222
(87) Internationale Veröffentlichungsnummer: WO 2005/064765

(56) Entgegenhaltungen:
- DE-A- 10 102 658
- GB-A- 977 749
- US-A- 4 901 428
- US-A- 5 489 811

## Beschreibung

### Stand der Technik

Die Erfindung betrifft ein Verfahren zum Herstellen eines Ständers sowie einen danach hergestellten Ständer nach der Gattung der unabhängigen Patentansprüche.

Aus der WO 01/54254 A1 ist ein Verfahren zum Herstellen eines Ständers bekannt, der für eine elektrische Maschine, insbesondere für einen Generator für Kraftfahrzeuge, vorgesehen ist. Dabei wird aus streifenförmigen Lamellen zunächst ein im Wesentlichen quaderförmiges Lamellenpaket gebildet, und in einem der folgenden Schritte durch Rundbiegen in eine Ringform umgeformt. Die Ringform dieses Ständers bzw. Ständereisens weist zwei axiale Stirnflächen auf. Es wurde festgestellt, dass derartige, zwischen zwei Lagerschilden über die axialen Stirnflächen axial eingespannte Ständer bzw. Ständereisen eine verhältnismäßig hohe axiale Elastizität und Nachgiebigkeit aufweisen. Diese Nachgiebigkeit kann dazu führen, das sich lösbare Befestigungsmittel, bspw. Schrauben, die zum Einspannen des Ständers zwischen den Lagerschilden dienen, lockern oder alternativ sehr hoch belastbar sein müssen, was Auswirkungen auf deren Größe hat. So diese Schrauben am Außenumfang des Ständers angeordnet sind, kann dies zur Vergrößerung des Außendurchmessers der elektrischen Maschine führen.

Streifenförmige Lamellen dienen auch in den Dokumenten US 4 901 428 und US 5 489 811 zur Herstellung von Ständerblechpacketen.

### Vorteile der Erfindung

Das erfindungsgemäße Verfahren zum Herstellen eines Ständers für eine elektrische Maschine mit den Merkmalen des ersten unabhängigen Anspruchs hat den Vorteil, dass durch das an den axialen Stirnflächen zumindest stellenweise in Axialrichtung plastisch verformte ringförmige Lamellenpaket dessen Nachgiebigkeit, insbesondere im Zusammenhang mit der Verschraubung zwischen zwei Lagerschilden, deutlich verringert und somit die Befestigung zwischen den beiden Lagerschilden verbessert wird. Die Gefahr des Lösens von Befestigungselementen zwischen den beiden Lagerschilden ist deutlich verringert. Darüber hinaus wird ein Auffächern der elektromagnetisch wirksamen Innenzähne des Ständers durch das Verspannen zwischen den beiden Lagerschilden weitestgehend vermieden. Elektromagnetische Verluste werden dadurch wiederum verringert.

Durch die in den Unteransprüchen aufgeführten Maßnahmen sind vorteilhafte Weiterbildungen des Verfahrens nach dem Hauptanspruch möglich.

Besonders vorteilhaft ist die Anformung von axialen Spannflächen durch die plastische Verformung der Stirnflächen an den beiden axialen Enden des ringförmigen Lamellenpakets. Dies bedeutet, dass durch das plastische Verformen in Axialrichtung nunmehr der elastische Anteil der Verformung des Ständers in Axialrichtung verringert wird. Die Elastizität zwischen den beiden Lagerschilden ist verringert. Die verbleibende Kompressibilität des Ständers ist nunmehr homogener, so dass die Verspannungen zwischen den einzelnen Befestigungselementen zwischen den beiden Lagerschilden nunmehr weniger unterschiedlich sind. Insbesondere bei Herstellung der axialen Spannflächen durch einen Kaltumformprozess erzeugen die axial einwirkenden Umformkräfte neben der beabsichtigten plastischen Verformung eine Erhöhung der axialen Steifigkeit. Dies wirkt sich vorteilhaft aus bei Ständern für axiale Spanntechnik, die im montierten Zustand einer großen Druckbelastung ausgesetzt sind und auf Grund ihres laminierten Paketaufbaus ein für die Gehäuseverschraubung prinzipiell ungünstiges Setzverhalten aufweisen. Durch diese Kraftbeaufschlagung nach dem Rundbiegevorgang auf den fertiggestellten hohlzylindrischen Ständer reduziert sich die prinzipiell vorhandene Streuung der bleibenden Verformung stark. Deshalb ist es auch möglich, Maß- und Formtoleranzen des Ständers noch genauer festzulegen und damit noch höhere Anforderungen zu erfüllen.

Gemäß einer weiteren Ausgestaltung der Erfindung ist vorgesehen, dass das ringförmige Lamellenpaket gleichzeitig mit der axialen Verformung an dessen Außenumfang in radialer Richtung gepresst und dadurch ebenfalls plastisch verformt wird. Diese Maßnahme vermeidet all zu große, durch die axiale Kraftbeaufschlagung hervorgerufene Änderungen in radialer Richtung, die Außenform des Ständereisens bzw. Ständers ist genauer und dadurch besser einzuhalten.

Es ist insbesondere vorgesehen, dass durch die plastische Verformung des Außenumfangs des Lamellenpakets ein radialer Gehäuseeinpass gebildet wird. Bei der sogenannten Axialspanntechnik bei Kraftfahrzeug-Generatoren und allgemeinen elektrischen Maschinen ist nicht nur eine sichere axiale Lage des Ständers zu den Lagerschilden erforderlich, sondern auch eine genaue zentrische Anordnung zum im Ständer angeordneten Läufer. Durch die erfindungsgemäße Maßnahme wird somit durch den Gehäuseeinpass ein Zentrierdurchmesser angeformt, durch den eine äußerst exakte Anordnung des Ständers in den Lagerschilden und ebenfalls eine äußerst exakte Zuordnung zum Läufer ermöglicht wird. Darüber hinaus kann dadurch die Rechtwinkligkeit zwischen den axialen Spannflächen und dem Zentrierdurchmesser bzw. dem Gehäuseeinpass einwandfrei hergestellt werden. Des weiteren kann vorgesehen sein, dass durch gleichzeitige plastische Verformung in axialer und radialer Richtung eine Fügefase zwischen den axialen Spannflächen und dem Gehäuseeinpass angeformt wird. Diese erfindungsgemäß hergestellte Fügefase erspart somit einen weiteren bspw. zerspanenden Arbeitsgang und ermöglicht zu dem eine leichte und sichere Montage des Ständers in ein Lagerschild.

Durch das gewählte Kaltumformverfahren entfallen beispielsweise teure spanende Arbeitsverfahren, Grate können sich durch den Entfall der spanenden Bearbeitung nicht bilden, so dass die dadurch verursachten Montageprobleme entfallen.

Erfindungsgemäß sollen die Lamellen eine Stärke zwischen 0,35 mm und 1 mm aufweisen, wobei eine Stärke von 0,5 mm bevorzugt wird und vorzugsweise alle Lamellen die gleiche Stärke aufweisen. Dies hat den Vorteil, dass die Leistung und der Wirkungsgrad hoch ist, weil die Lamellenstärke somit in einem Bereich liegt, der in der sogenannten Elektroblechgüte herstellbar ist. Darüber hinaus ist der Aufwand für Werkzeuge vereinfacht und die Produktivität der Fertigungseinrichtung gesteigert. Durch den homogenen Aufbau (gleiche Stärke) ist die Biegeeigenschaft des Ständereisens verbessert.

Des weiteren ist vorgesehen, dass die Anzahl von n Lamellen eines Ständerblechpakets in diesem in der gleichen Reihenfolge angeordnet werden, wie diese in einem Stanzwerkzeug erzeugt werden. Dies hat den Vorteil, dass einerseits Lamellen mit praktisch gleicher Materialstärke verwendet werden können und somit die vorhersehbaren Pakettoleranzen für die Ständerblechpakete möglichst klein sind. Teilungs- und Positionierungsfehler der Stempelführungsplatte bzw. Schneidplatte beim Stanzen sowie Positionierungsfehler des Blechstreifens im Stanzwerkzeug können dadurch minimal gehalten werden und somit auch im Enderzeugnis, d.h. dem Ständerblechpaket.

Des weiteren ist vorgesehen, dass vor dem Ausstanzen der Lamellen aus einem Lamellenblechhalbzeug, beispielsweise einer Bandspule, dessen Materialstärke mittels einer Messvorrichtung ermittelt wird, und ausgehend von einer mit einer Toleranz versehenen Sollbreite des im Wesentlichen quaderförmigen Lamellenpakets die Sollanzahl der Lamellen in dem im Wesentlichen quaderförmigen Lamellenpaket ermittelt wird. Über einen Rechner wird die genaue Lamellenzahl für ein Ständerblechpaket ermittelt. Durch diese Maßnahme erhält man kleine Paketbreitentoleranzen.

Eine weitere Maßnahme zur Herstellung bzw. zum Erhalt kleinerer Axialtoleranzen bzw. Lamellenpaket-Breitetoleranzen besteht darin, die einzelnen. Lamellen zunächst zu reinigen und somit Restöl und Verschmutzungen vom Stanzprozess zu entfernen. Anschließend werden diese gereinigten Lamellen zu einem spaltfreien Lamellenpaket geschichtet, genau ausgerichtet und unter Beaufschlagung mit einer Kraft gegeneinander gepresst, um anschließend die Lamellen durch eine Verbindungstechnik miteinander zu verbinden, vorzugsweise durch Schweißen. Insbesondere eignet sich hier das sogenannte Laserstrahlschweißen, da dies ein verzugfreies Lamellenpaket bei geringstmöglichem Wärmeeintrag ergibt.

Das Rundbiegen des Lamellenpakets erfolgt unter einer axialen Vorspannung. Dadurch werden unzulässige plastische Verformungen, wie zum Beispiel Auffächern und Wellen der Lamellen, vermieden.

Gemäß einer weiteren, vorteilhaften Ausgestaltung der Erfindung ist vorgesehen, dass das im Wesentlichen quaderförmige Lamellenpaket nach dem Rundbiegen unter axialer Vorspannung an den beiden zueinander gerichteten Stirnenden des Lamellenpakets miteinander verbunden werden. Auch dieser Verbindungsprozess erfolgt vorzugsweise mittels eines Laserschweißverfahrens.

Es ist vorgesehen, dass die Verringerung der axialen Länge des Ständerpakets am Außenumfang durch den axialen Umformungsschritt zwischen 1% und 10% beträgt.

Zur weiteren Verbesserung der Axialsteifigkeit des Ständerpakets bzw. Lamellenpakets ist vorgesehen, dass vor dem Rundbiegen des zunächst streifenförmigen Lamellenpakets eine Wicklung in die Nuten des Lamellenpakets eingelegt wird. Durch die zwangsläufige Reibung zwischen Wicklung und Nuten, vermittelt über Drahtlack und Nutisolation, ergibt sich die weiter verbesserte Axialsteifigkeit.

Gemäß dem Vorrichtungsanspruch 18 ist ein Ständer für eine elektrische Maschine vorgesehen, dessen Ständereisen aus einem rundgebogenen, im wesentlichen quaderförmigen Lamellenpaket besteht, welches axiale Stirnflächen aufweist und an diesen Stirnflächen in axialer Richtung plastisch verformt ist. Diese plastische Verformung kann sich auf lokale Bereiche beschränken, so dass das Lamellenpaket zumindest stellenweise am Außenumfang der axialen Stirnflächen verformt ist. Weist das Lamellenpaket Außenzähne auf, so können sich diese Stellen auf die Außenzähne beschränken.

Das Ständereisen soll zum passgenauen Fügen in ein Lagerschild an seinem Umfang zumindest einen radialen plastisch umgeformten Ständereinpass haben. Dieser ist an zumindest einem axialen Ende des Ständereisens angeordnet.

Des weiteren weist der Ständer zumindest eine umgeformte Fügefase auf. Das Ständereisen weist an seinem Innendurchmesser eine größere axiale Länge auf, als an seinem Außendurchmesser. Im Rahmen der hier vorgesehen Erfindung wird dadurch das Ständereisen eine größere axiale Steifigkeit aufweisen.

### Zeichnungen

In den Zeichnungen sind Ausführungsbeispiele eines erfindungsgemäßen Verfahrens zum Herstellen eines Ständers sowie ein erfindungsgemäßer Ständer dargestellt.

Es zeigen
- Figur 1a, 1b, 1c: das prinzipielle Herstellungsverfahren eines nach dem sogenannten Flachpaketherstellungsverfahren hergestellten Ständerkems,
- Figur 2: wie das ringförmige Lamellenpaket an den axialen Stirnflächen in Axialrichtung plastisch verformt werden wird,
- Figur 3: ausschnittsweise die Veränderung des Lamellenpakets während dem axialen Umformungsprozess,
- Figur 4: die Veränderung des Lamellenpakets nach dem Umformprozess,
- Figur 5: ausschnittsweise die Veränderung des Lamellenpakets während dem axialen und radialen Umformungsprozess,
- Figur 6: die Veränderung des Lamellenpakets nach dem axialen und radialen Umformprozess,
- Figur 7: die Veränderung des Lamellenpakets nach dem axialen und radialen Umformprozess mit einer angeprägten Fügefase,
- Figur 8: eine Seitenansicht des Lamellenpakets nach dem axialen und radialen Umformprozess mit einer angeprägten Fügefase,
- Figur 9: in der Stanzreihenfolge angeordnete Lamellen,
- Figur 10: eine räumliche Ansicht eines Lamellenpakets,
- Figur 11: einen Querschnitt durch eine Nut eines Lamellenpakets,
- Figur 12: eine räumliche Ansicht eines weiteren Ausführungsbeispiels eines Lamellenpakets,
- Figur 13: einen Querschnitt durch eine Nut des in Figur X3 dargestellten Lamellenpakets,
- Figur 14: einen Querschnitt durch eine Nut des in Figur X3 dargestellten Lamellenpakets nach dem Beseitigen von Stanzgraten,
- Figur 15a: axiale Spannflächen nur an Außenzähnen eines Lamellenpakets,
- Figur 15b: axiale Spannflächen an Außenzähnen und dem Joch eines Lamellenpakets,
- Figur 16 bis 23: verschiedene Ausführungsbeispiele für Schweißnähte am Lamellenpaket.

### Beschreibung

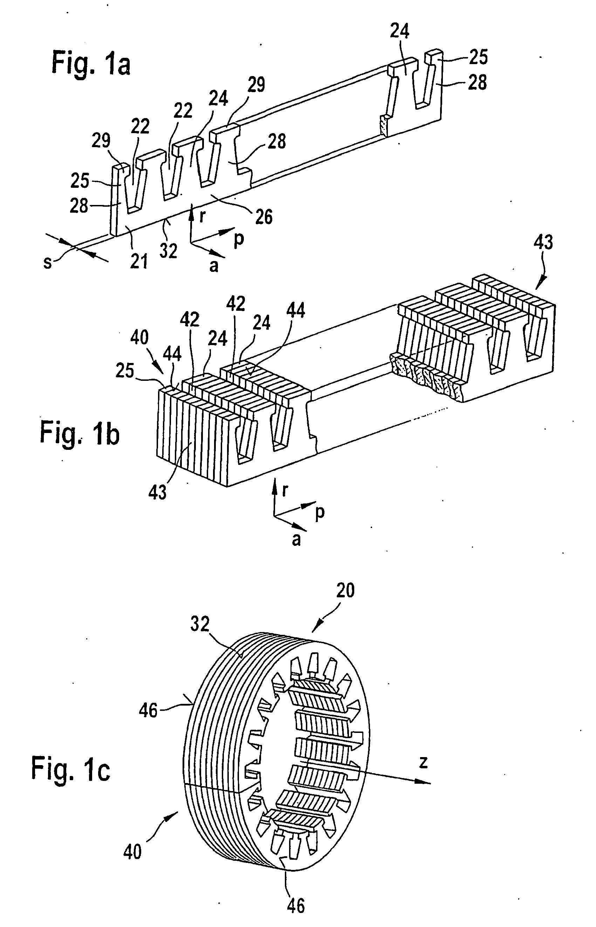

In den Figuren 1a, 1b und 1c ist das prinzipielle Herstellungsverfahren eines nach dem sogenannten Flachpaketherstellungsverfahren hergestellten Ständerkerns 20 für eine elektrische Maschine dargestellt. Zunächst werden im Wesentlichen rechteckige bzw. quaderförmige streifenförmige Lamellen 21 bereitgestellt, die mit Nutschlitzen 22 versehen sind. Die Nutschlitze 22 werden beidseitig jeweils durch einen Zahn 24 oder einen Halbzahn 25 begrenzt. Die Zähne 24 bzw. Halbzähne 25 sind untereinander über ein Joch 26 miteinander verbunden. Das Joch 26 erstreckt sich im Wesentlichen in die Umfangsrichtung p und in die radiale Richtung r, darüber hinaus weist es allgemein eine Materialstärke s auf, die mit einer Materialstärke der Lamelle 21 übereinstimmt. Das Joch 26 weist eine von den Zähnen 24 bzw. 25 abgewandte Jochrückenfläche 32 auf. Diese Jochrückenfläche 32 hat eine Orientierung in negativer Richtung r. Die Zähne 24 und Halbzähne 25 erstrecken sich im Wesentlichen in der radialen Richtung und der Umfangsrichtung p. Auch die Zähne 24 und 25 weisen die Materialstärke s auf. Wie die Zähne 24 und 25 erstrecken sich naturgemäß auch die Nutschlitze 22 in der Umfangsrichtung p und in der radialen Richtung r. Die Zähne 24 und Halbzähne 25 lassen sich unterteilen in jeweils einen Zahnfuß 28 und in einen gegenüber dem Zahnfuß 28 in Umfangsrichtung p verbreiterten Zahnkopf 29. Die Zähne 24 und 25 sind über den Zahnfuß 28 mit dem Joch 26 einstückig verbunden, wobei die Zahnfüße 28 im Wesentlichen rechtwinklig vom Joch 26 ausgehen. Die Halbzähne 25 sind jeweils am Ende des Jochs 26 angeordnet und somit im Ausgangszustand der Lamelle 21 in der Umfangsrichtung p entgegengesetzt. Eine derartige Lamelle 21 kann beispielsweise 36 Nutschlitze 22 oder auch beispielsweise 48 Nutschlitze 22 aufweisen. Es sind aber auch höhere Nutschlitzzahlen möglich. Eine derartige Lamelle 21 besteht üblicher Weise aus einem sogenannten Elektroblech und ist demzufolge ferromagnetisch.

Aus einer Vielzahl solcher Lamellen 21, beispielsweise aus 60 Lamellen 21, wird durch das gegenseitige Aneinanderlegen dieser Lamellen 21 ein im Wesentlichen quaderförmiges Lamellenpaket 40 gebildet. Die Lamellen 21 werden dabei so ausgerichtet, dass sich deren durch das Joch 26, die Zähne 24 und 25 gebildete Außenkonturen einander decken. Das Lamellenpaket 40 hat in Umfangsrichtung an seinen Enden je ein Stirnende 43. Das dann daraus gebildete Lamellenpaket 40 weist somit wiederum die Axialrichtung a, die Umfangsrichtung p und auch die radiale Richtung r auf. Konsequenter Weise hat dieses Lamellenpaket 40 nunmehr sich in die Axialrichtung a erstreckende Nuten 42, die wiederum von den Zähnen 24 bzw. Halbzähnen 25 begrenzt sind. Die Zähne 24 und Halbzähne 25 bilden einzelne Oberflächen, die in der radialen Richtung r orientiert sind. Diese Zahnkopfoberflächen 44 bilden später die Oberflächen, die mit den elektromagnetisch wirksamen Teilen eines Läufers unmittelbar zusammenwirken. In einem der folgenden Schritte wird dieses Lamellenpaket 40 durch Rundbiegen in eine Ringform umgeformt. Durch dieses Umformen sind nach dem Rundbiegen die Zahnkopfoberflächen 44 allesamt derart ausgerichtet, dass diese alle auf eine Zylinderachse z ausgerichtet sind, die der Axialrichtung a entspricht. Die Zahnkopfoberflächen 44 sind dann somit Teil einer in die Ringform des Lamellenpakets 40 einschreibbaren Zylindermanteloberfläche, siehe auch Figur 1c. Durch dieses Rundbiegen gelangen die beiden Halbzähne 25 jeweils gegeneinander in Anlage, so dass diese gemeinsam in elektromagnetischer Hinsicht einem ganzen Zahn 24 entsprechen. Diese Ringform des Lamellenpakets 40 weist zwei axiale Stirnflächen 46 auf, von denen in Figur 1c nur eine zu sehen ist. Wie nachfolgend erläutert wird, wird in einem weiteren der folgenden Schritte das ringförmige Lamellenpaket 40 zumindest stellenweise an den axialen Stirnflächen 46 in Axialrichtung a plastisch verformt.

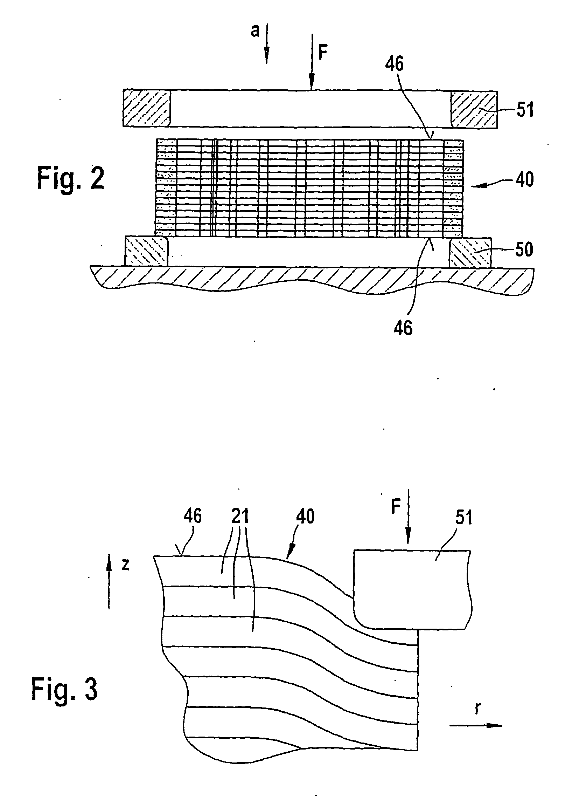

In Figur 2 ist dargestellt, wie das ringförmige Lamellenpaket 40 an den axialen Stirnflächen 46 in Axialrichtung plastisch verformt werden wird. Zur Durchführung dieses Verfahrensschritts wird das runde Lamellenpaket 40 bzw. der Ständerkern 20 mit einer axialen Stirnfläche 46 auf einen Ring 50 gelegt, dessen Innendurchmesser kleiner ist, als der Außendurchmesser des Lamellenpakets 40. Von der gegenüberliegenden axialen Stirnfläche 46 herkommend wird ein zweiter Ring 51 auf diese axiale Stirnfläche 48 zubewegt, bis dieser auf der zweiten axialen Stirnfläche 46 aufliegt. Auch der Innendurchmesser dieses Rings 51 ist kleiner als der Außendurchmesser des rundgebogenen Lamellenpakets 40. Der Ring 51 wird nachfolgend mit einer Kraft belastet, drückt auf das ringförmige Lamellenpaket 40, so dass sich dieses mittels des Prinzips "actio gleich reactio" mit der entsprechenden Gegenkraft auf dem Ring 50 abstützt. Durch diese Belastung mit der Kraft F wird das ringförmige Lamellenpaket 40 an den axialen Stirnflächen 46 in Axialrichtung a plastisch verformt. Je nach dem, ob die Ringe 50 und/oder 51 mit ihrer ganzen Ringform oder nur einem Teil davon an den Stirnflächen 46 anliegen, wird entweder über den ganzen Umfang des Lamellenpakets 40 oder nur an Teilen bzw. einzelnen Stellen des Umfangs dieses in Axialrichtung verformt Figur 3 zeigt ausschnittsweise die Veränderung des Lamellenpakets 40 während des Umformungsprozesses durch den Ring 51 bzw. den Ring 50. In stark vergrößerte Darstellung ist hier ausschnittsweise die in Figur 2 rechte obere Ecke des Lamellenpakets 40 im Moment des tiefsten Eindringens des Rings 51 dargestellt. Wie deutlich zu erkennen ist, werden die einzelnen Lamellen 21 an ihrem radial äußeren Ende durch die - vorzugsweise nach radial innen - gerundete Kontur des Rings 51 plastisch verformt. Das Material der Lamellen 21 wird hierbei in Axialrichtung komprimiert und in diesem Fall entsteht ein leicht nach außen hin bauchiges Lamellenpaket 40.

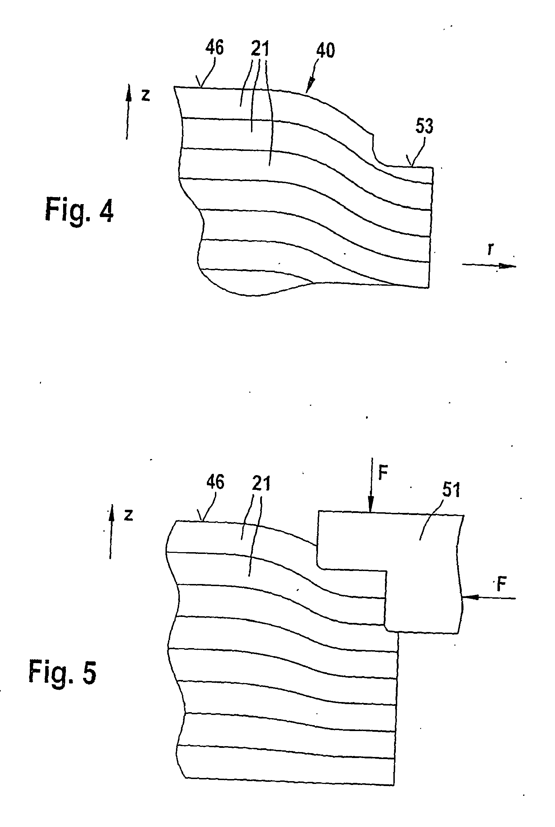

In Figur 4 ist der gleiche Ausschnitt des Lamellenpakets 40 aus Figur 3 ohne den Ring 51 nach dessen Abheben dargestellt. Durch die plastische Verformung der Stirnflächen 46 entstehen an beiden axialen Enden des ringförmigen Lamellenpakets 40 axiale Spannflächen 53.

In Figur 5 ist ein weiteres Ausführungsbeispiel für die plastische Verformung der axialen Stirnflächen 46 dargestellt. Während der Ring 51 gemäß dem Ausführungsbeispiel aus Figur 3 bzw. 4 ein im Wesentlichen quadratisches Profil aufweist, so weist der in Figur 5 dargestellte Ring 51 eine etwas andere Kontur auf. Der Ring 51 ist zwar weiterhin so ausgebildet, dass dieser dazu geeignet ist, axiale Stirnflächen in Axialrichtung plastisch an das Lamellenpaket 40 anzuformen; darüber hinaus ist dieser Ring 51 jedoch auch in der Lage, gleichzeitig am Umfang des Lamellenpakets 40 dieses in radialer Richtung zu pressen und dadurch plastisch zu verformen.

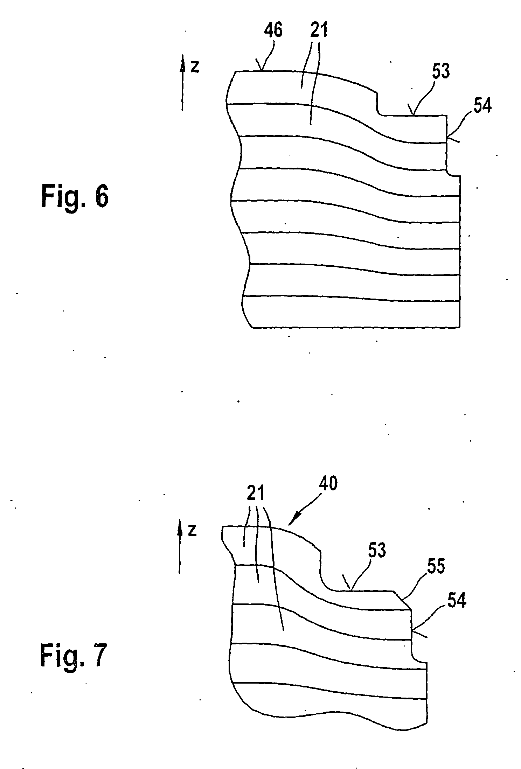

Figur 6 zeigt die entsprechende Kontur des Lamellenpakets 40 nach dem Abheben des Rings 51. Dabei wird durch die plastische Verformung des Umfangs des Lamellenpakets 40 ein Gehäuseeinpass gebildet, so dass nach dem Abheben des Rings 51, wie bereits zuvor, eine axiale Spannfläche 53 und nunmehr auch ein radialer Gehäuseeinpass 54 zurückbleiben. Es ist vorgesehen, dass der Durchmesser des Gehäuseeinpasses zwischen 0,01% und 1% kleiner als das Ausgangsmaß ist.

In Figur 7 ist eine weitere Variante dieser plastischen Verformung des Lamellenpakets 40 dargestellt. In diesem Ausführungsbeispiel ist nicht nur eine axiale Spannfläche 53 und ein Gehäuseeinpass 54 vorhanden, sondern darüber hinaus eine durch den gleichen plastischen Verformungsvorgang erzeugte Fügefase 55.

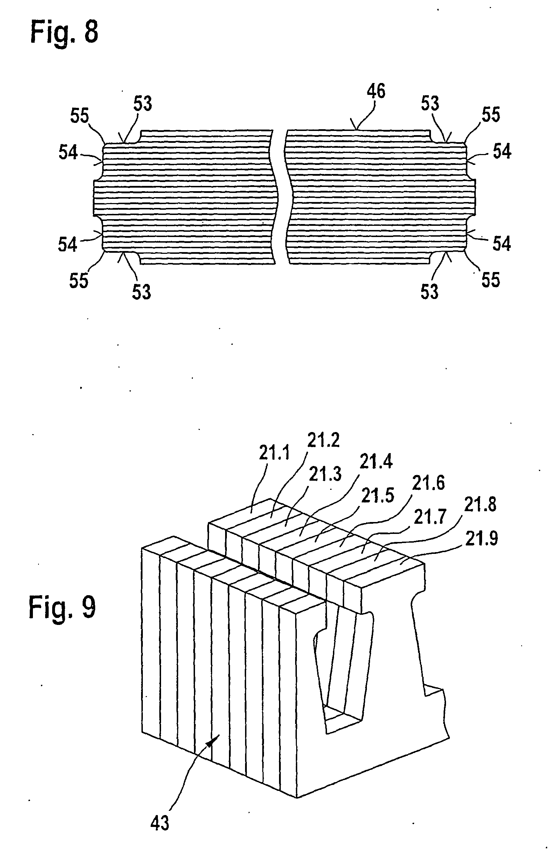

In Figur 8 ist die Seitenansicht eines rundgebogenen Lamellenpakets 40 nach dem plastischen Verformen der axialen Stirnfläche 46 bzw. des Außenumfangs dargestellt. An dieser Stelle sei erwähnt, dass die Verformungen an die Ecke angrenzen, an der sich die axiale Stirnfläche 46 und die Außenumfangsfläche treffen. Sowohl die axiale Spannfläche 53 als auch der Gehäuseeinpass 54 erstrecken sich über eine Länge von ca. 1 bis 6 mm.

Um eine besonders maßsichere axiale Länge des Lamellenpakets 40 nach dem plastischen Verformen in Axialrichtung zu erhalten, sind besondere Maßnahmen erforderlich:

Zunächst ist wichtig, dass die Lamellen eine Stärke zwischen 0,35 mm und 1 mm aufweisen, wobei eine Stärke von 0,5 mm bevorzugt wird. Idealer Weise haben alle Lamellen die gleiche Materialstärke.

Zur Herstellung eines Lamellenpakets 40, das besonders günstige Eigenschaften hinsichtlich zu erwartender Toleranzen aufweist, ist vorgesehen, dass bereits beim Stanzen der Lamellen 21 in einer bestimmten Art und Weise vorgegangen wird. Beim Stanzen werden die Lamellen 21, so sie aus einer Maschine bzw. einem Stanzwerkzeug stammen, nacheinander aus der Stanzmaschine ausgeworfen. Es wird beispielsweise eine erste Lamelle 21.1, daran unmittelbar anschließend eine zweite Lamelle 21.2, dann eine Lamelle 21.3, nachfolgend eine Lamelle 21.4 und wiederum die folgenden Lamellen 21.5, 21.6, 21.7, 21.8, 21.9 gestanzt. In diesem Beispiel sind folglich neun Lamellen 21.1 bis 21.9 unmittelbar aufeinanderfolgend ausgestanzt. Genau diese Folge soll beim Paketieren des Lamellenpakets 40 ebenfalls eingehalten werden, siehe auch Figur 9. Die eben erwähnte Reihenfolge von Lamellen 21 wird auch in diesem Beispiel bei der Herstellung des Lamellenpakets 40 befolgt. Demzufolge wird an die erste Lamelle 21.1 des zu bildenden Lamellenpakets 40 direkt danach die Lamelle 21.2, an diese die Lamelle 21.3, an diese wiederum die Lamelle 21.4 u.s.w. bis zur Lamelle 21.9 angelegt und letztlich in dieser Art und Weise ein Lamellenpaket 40 gebildet. Weist das Lamellenpaket beispielsweise n = 60, 70 oder 80 Lamellen 21 auf, so werden entsprechend die Lamellen 21.1 bis 21.60 oder 21.1 bis 21.70 oder 21.1 bis 21.80 in der beschriebenen Art und Weise aneinandergelegt und zu einem Lamellenpaket 40 paketiert. Es ist folglich vorgesehen, dass die Anzahl von n Lamellen 21 eines Ständerblechpakets 40 in diesem in der gleichen Reihenfolge angeordnet wird, wie diese in einem Stanzwerkzeug erzeugt wird.

Die zuvor beschriebene Maßnahme, wonach beispielsweise genau n = 60, 70 oder 80 Lamellen 21 zu einem Lamellenpaket 40 paketiert werden sollen, ist dann besonders zielführend, wenn die Toleranzen der Materialstärken s der einzelnen Lamellen 21 in einem bestimmten, sehr genauen Bereich liegen.

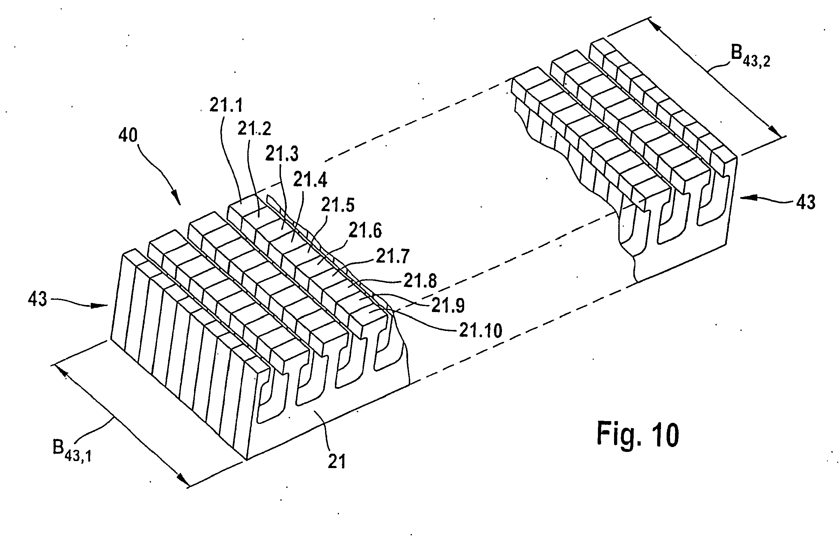

Nachfolgend wird eine weitere Maßnahme zur Verbesserung der Axialtoleranzen des Lamellenpakets 40 beschrieben. Die Lamellen 21 werden üblicherweise aus Blech gestanzt. Diese Bleche haben oftmals die Eigenschaft, dass deren Materialstärke quer zur Walzrichtung unterschiedlich ist. Üblicherweise nimmt die Materialstärke quer zur Walzrichtung zu-oder ab, so dass das Blech einen trapezförmigen Querschnitt aufweist. Stanzt man nun die Lamellen 21 quer zur Walzrichtung aus, so dass das Joch 26 quer zur Walzrichtung verläuft, so weist die Lamelle 21 eine in Jochrichtung bzw. Umfangsrichtung p bspw. geringfügig ansteigende Materialstärke auf. Paketiert man diese Lamellen 21 wie beschrieben in der entsprechenden Stanzfolge - im Beispiel gemäß Figur 10 zehn Lamellen 21 - so ergibt sich in der Folge ein Lamellenpaket 40, dass an seinen beiden entgegengesetzten Stirnenden 43 in Axialrichtung a unterschiedlich breit ist, B_{43.1} < B_{43.2}. Das Lamellenpaket 40 ist somit in seiner Draufsicht auf die Zähne 24 im prinzip trapezförmig. Ein runder Ständerkem 20 aus einem solchen Lamellenpaket 40 läge mit seinen axialen Stirnflächen 46 ungleichmäßig an entsprechenden Gegenflächen des Gehäuses. Ganz besonders an den aneinanderliegenden Stirnenden 43 wäre eine Stufe, so das rechts und links von den Stirnenden 43 benachbarte Befestigungsmittel sehr unterschiedlich verspannt und belastet würden.

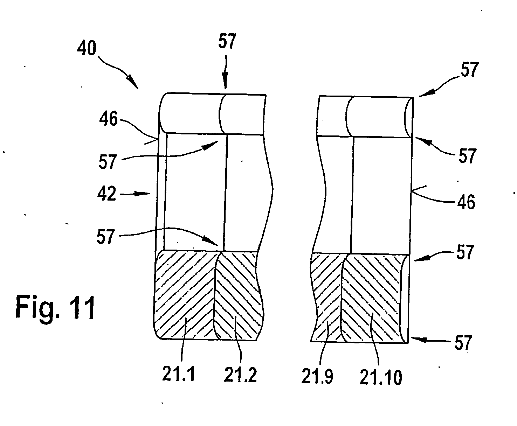

Figur 11 zeigt einen Schnitt durch eine der Nuten 42 des Lamellenpakets 40 aus Figur 10. Dieses Lamellenpaket 40 weist wie auch die zuvor erläuterten Lamellenpakete 40 und jede einzelne Lamelle 21 an seinen Konturen einen sogenannten Stanzgrat 57 auf. An der im Bild linken Stirnfläche 46 zeigen die Stanzgrate 57 in Richtung zur axialen Paketmitte; auf der entgegengesetzten rechten Stirnfläche 46 zeigen die Stanzgrate 57 vom Lamellenpaket 40 weg nach außen. Fluchtungsfehler zwischen den einzelnen Lamellen 21 sind dadurch beim Paketieren minimiert (Formschluss zwischen Lamellen).

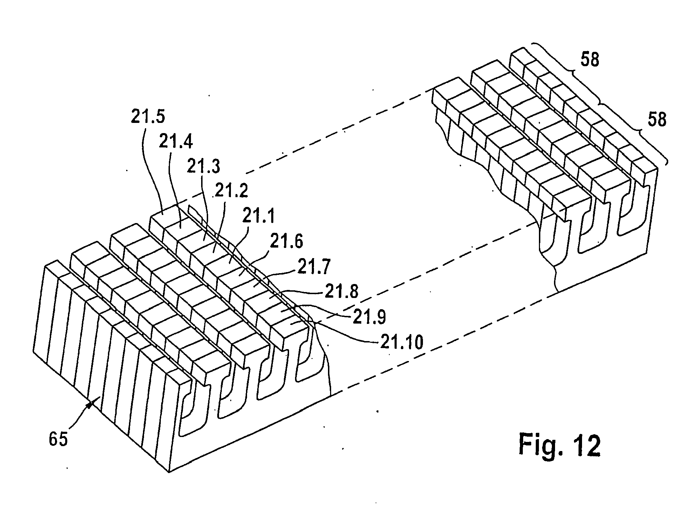

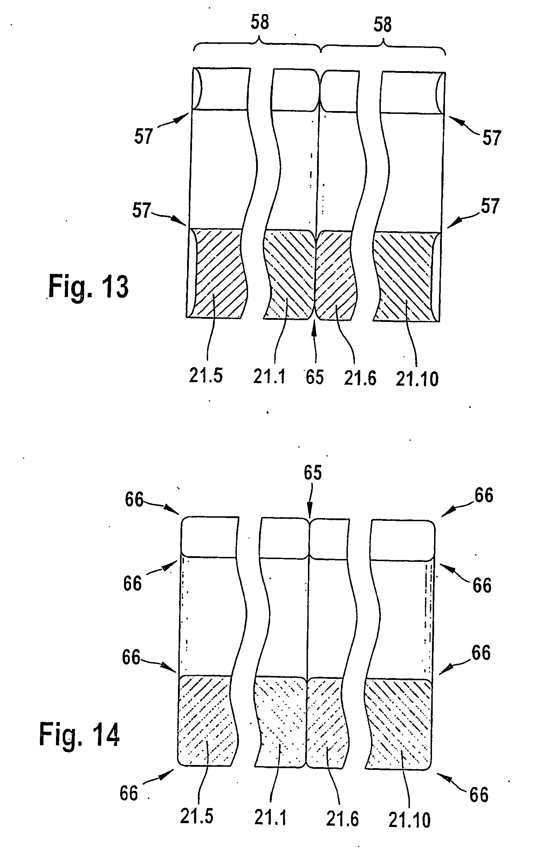

Um die oben erwähnte Trapezform so weit wie möglich zu vermeiden ist vorgesehen das wie in Figur 10 dargestellte Lamellenpaket 40 in zwei Teillamellenpakete 58 aufzuteilen und diese beiden Teillamellenpakete 58 so zu einem Lamellenpaket 40 zusammenzusetzen, dass die Stanzgrate 57 an einer inneren Fügestelle 65 benachbarter Lamellen 21 voneinander wegweisen, siehe auch Figur 12 und Figur 13. Die in Richtung des Jochs 26 unterschiedlichen Materialstärken der Lamellen 21 lassen sich so über die Länge des Jochs 26 ausgleichen, dass die Breiten 8₄₃ an den Stirnenden 43 nahezu gleich oder gar gleich sind. Damit innere Elastizitäten in Axialrichtung a weitgehend vermieden werden ist vorgesehen, dass an der inneren Fügestelle die Stanzgrate 57 nicht aufeinander liegen. Desweiteren würde eine derartige Anordnung die Genauigkeit der Positionierung der beiden Teillamellenpakete 58 erschweren, da die aufeinander liegenden Grate sich wechselseitig am Verschieben hindern würden.

Es kann vorgesehen sein, die Teillamellenpakete 58 in einem Zwischenschritt durch ein Verbindungsherstellungsverfahren in sich zu fixieren, bspw. durch Schweißnähte oder die anderen unten genannten Verfahren, bevor diese zu einem Lamellenpaket 40 zusammengesetzt werden.

Bei einem derartig aufgebauten Lamellenpaket 40 zeigen somit an den axialen Stirnflächen 46 die Stanzgrate 57 vom Lamellenpaket 40 weg.

Eine weitere Maßnahme zur Verbesserung der Axialtoleranzen bzw. der Breitetoleranzen des Lamellenpakets 40 besteht darin, die nach axial außen gerichteten Stanzgrate 57 der Lamellen 21 zu beseitigen. Geeignete Verfahren sind bspw. spanende oder spanlose Verfahren, thermisches Entgraten, Laserentgraten. Besonders vorteilhaft ist das Anformen einer gerundeten Kontur 66, bspw. eines Radius an den Nutkonturen auf beiden axialen Stirnflächen 46 des Lamellenpakets 40, siehe auch Figur 14.

Da besonders hohe Toleranzanforderungen an die Lamellenstärken jedoch zu besonders hohen Kosten beim Ausgangsmaterial für die Lamellen 21 führen, kann eine weitere Maßnahme vorgesehen sein, um einerseits eine ausreichende Toleranz bei den Breiten der Lamellenpakete 40 zu erreichen, aber gleichzeitig nicht zu hohe Kosten durch extrem hohe Anforderungen an die Materialstärken s bzw. deren Toleranzen zu erzeugen. Deshalb ist vorgesehen, dass vor dem Ausstanzen der Lamellen 21 aus einem Lamellenblechhalbzeug dessen Materialstärke s mittels einer Messvorrichtung M ermittelt wird und ausgehend von einer mit einer Toleranz versehenen Sollbreite des im wesentlichen quaderförmigen Lamellenpakets 40 die Sollanzahl der Lamellen 21 in dem im wesentlichen quaderförmigen Lamellenpaket 40 ermittelt wird. Durch diese Maßnahme kann verhältnismäßig einfach auf Schwankungen der Toleranzlage bei den Materialstärken s der Lamellen 21 reagiert werden. Während folglich bei einem Lamellenpaket 40 beispielsweise idealerweise 60 Lamellen 21 vorgesehen sind, kann es auf Grund der Schwankungen der Materialstärke s vorkommen, dass bei verhältnismäßig dicken Lamellen 21 in der Folge nicht 60 Lamellen 21 ein Lamellenpaket 40 bilden, sondern nur noch 59 Lamellen. Weisen die einzelnen Lamellen 21 dagegen eine verhältnismäßig dünne Materialstärke s auf, so kann das einzelne Lamellenpaket 40 auch beispielsweise 61 Lamellen 21 aufweisen. Analog dazu gilt dies für Lamellenpakete mit idealerweise 70 oder 80 Lamellen 21, die statt dessen entweder 69 oder 71 bzw. 79 oder gar 81 Lamellen 21 aufweisen können.

Eine weitere Maßnahme ein in axialer Richtung möglichst steifes und somit wenig elastisches Lamellenpaket 40 zu erreichen besteht darin, die noch einzelnen Lamellen 21 zunächst zu reinigen, um möglichst wenig die axiale Nachgiebigkeit fördernde Stoffe oder Partikel zwischen den Lamellen 21 zu haben, anschließend die Sollanzahl von Lamellen 21 zu einem spaltfreien, im Wesentlichen quaderförmigen Lamellenpaket 40 zu schichten, dieses genau auszurichten, was bedeutet, dass sich die Konturen der Lamellen 21 möglichst exakt decken, und anschließend unter Beaufschlagung mit einer Kraft in axialer Richtung bezüglich des Lamellenpakets 40, d.h. in Breitenrichtung des Lamellenpakets 40 (Richtung der Materialstärke s) die Lamellen 21 gegeneinander zu pressen und anschließend die Lamellen 21 durch eine Verbindungstechnik miteinander zu verbinden. Beispielsweise kann dies durch Schweißen, insbesondere Laserstrahlschweißen, geschehen. Durch diesen Verbindungsvorgang entsteht ein zusammenhängendes Lamellenpaket 40.

Weitere geeignete Verfahren zum Verbinden der Lamellen 21 sind z. B. das Clinchen und das Toxen, die beide sogenannte Durchsetzfügeverfahren sind, sowie das Stanzpaketieren und das Stanz-Laser-Paketieren.

Dieses so hergestellte, im wesentlichen quaderförmige Lamellenpaket 40 wird daran anschließend unter einer axialen Vorspannung des Lamellenpakets 40 rundgebogen. Axiale Vorspannung bedeutet hier, dass das Lamellenpaket 40 in Richtung der Materialstärke s gepresst wird.

Nach dem Rundbiegen des im Wesentlichen quaderförmigen Lamellenpakets 40 stehen sich die beiden zuvor erwähnten Stirnenden 43 direkt gegenüber und liegen aneinander im Wesentlichen an. In diesem bereits ringförmigen Zustand des Lamellenpakets 40 ist vorgesehen, dass die beiden Stirnenden 43 unter axialer Vorspannung, d.h. in Richtung der Materialstärke s des Lamellenpakets 40 miteinander verbunden werden. Es ist hierbei vorgesehen, diese beiden Stirnenden 43 mittels einer Schweißnaht, ganz besonders einer Laserschweißnaht, zu verbinden. Diese Naht verläuft beispielsweise in Axialrichtung am Außenumfang des Lamellenpakets 40

An das rundgebogene Lamellenpaket 40 wird im Zuge des axialen Umformungsschrittes noch eine weitere Anforderung gestellt Während das rundgebogene Lamellenpaket 40 prinzipiell vor dem axialen Umformungsschritt eine axiale Länge von 100% aufweist, so ist diese axiale Länge des Lamellenpakets 40 durch den axialen Umformungsschritt am Außenumfang des ringförmigen Lamellenpakets 40 verringert. Es ist in diesem Fall vorgesehen, dass die Verringerung der axialen Länge am Außenumfang des ringförmigen Lamellenpakets 40 durch den axialen Umformungsschritt zwischen 1% und 10% beträgt.

Eine weitere Maßnahme zur Verbesserung der axialen Steifigkeit des Lamellenpakets 40 besteht darin, vor dem Rundbiegen des im Wesentlichen quaderförmigen Lamellenpakets 40 eine Ständerwicklung in die Nuten 42 des Lamellenpakets 40 einzulegen. Die verbesserte axiale Steifigkeit des Lamellenpakets 40 bzw. des Ständerkerns 20 rührt in diesem Fall daher, dass zwischen der Ständerwicklung 60 und den Nuten 42 eine in axialer Richtung wirkende Reibung herrscht, die die axiale Steifigkeit des Ständerkerns 20 erhöht.

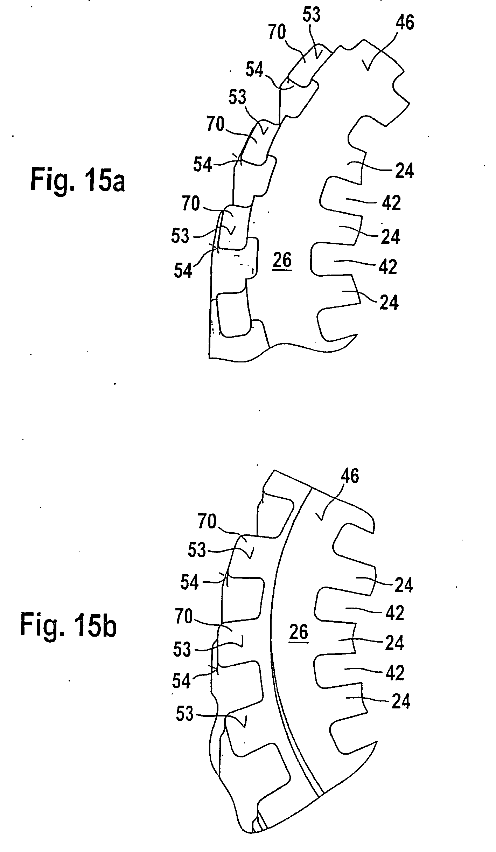

Die bisher beschriebenen Maßnahmen für den Ständerkerns 20 bzw. das Lamellenpaket 40 gelten nicht nur für am Außenumfang des runden Lamellenpakets 40 glatte oder nur leicht unebene bzw. nur geringfügig von der Zylinderform abweichende Lamellenpakete 40, sondern auch für Lamellenpakete 40, die an ihrem Außenumfang gezahnt sind, Figur 15a und 15b. Sowohl die Figur 15a als auch die Figur 15b zeigen jeweils ein rundgebogenes Lamellenpaket 40 mit einem Joch 26 und den Zähnen 24 sowie den Nuten 42. Am Außenumfang des Lamellenpakets 40, und somit von den Zihnen 24 abgewandt. sind sogenannte Außenzähne 70 vorgesehen. Wie bereits bei den zuvor besprochenen Ausführungsbeispielen sind auch hier die Lamellenpakete 40 im ringförmigen Zustand zumindest stellenweise an den axialen Stirnflächen 46 in Axialrichtung plastisch verformt. Im in Figur 15a dargestellten Ausführungsbeispiel sind dabei die Teile der axialen Stirnfläche 46 plastisch verformt, die durch die Außenzähne 70 gebildet werden. Dies bedeutet, dass sich die plastisch verformte axiale Stirnfläche 53 lediglich an den Außenzähnen 70 befindet. Auch der Gehäuseeinpass 54 ist in diesem Fall nur an den Außenzähnen 70 verwirklicht. Dies bedeutet, dass die Außenzähne 70 in Richtung zum Joch 26 in radialer Richtung gepresst und dadurch plastisch verformt sind. Die bereits vorerwähnte Fügefase 55 kann selbstverständlich auch bei einem Ausführungsbeispiel nach Figur 15a verwirklicht sein.

In Figur 15b ist die axiale Spannfläche 53 nicht nur auf den Außenzähnen 70 verwirklicht, sondern befindet sich auch teilweise im Bereich des Jochs 26, so dass nicht nur die Außenzähne 70, sondern auch das Joch 26, hier über einen schmalen Bereich seines Außenumfangs, in Axialrichtung plastisch verformt sind. Wie beim Ausführungsbeispiel nach Figur 15a sind auch hier die Außenzähne 70 jeweils mit einem Gehäuseeinpass 54 versehen.

Es wurde bereits erwähnt, dass die axiale Steifigkeit eines jeden Lamellenpakets 40 auch durch gezielte Schweißnähte am Lamellenpaket 40 gesteigert werden kann. Nachfolgend werden hierzu einige Ausführungsbeispiele erläutert.

Über das bisher Erwähnte und Beschriebene hinaus sind für ein zunächst flaches Lamellenpaket 40 verschiedene Schweißnähte und Schweißnahtkombinationen vorgesehen:

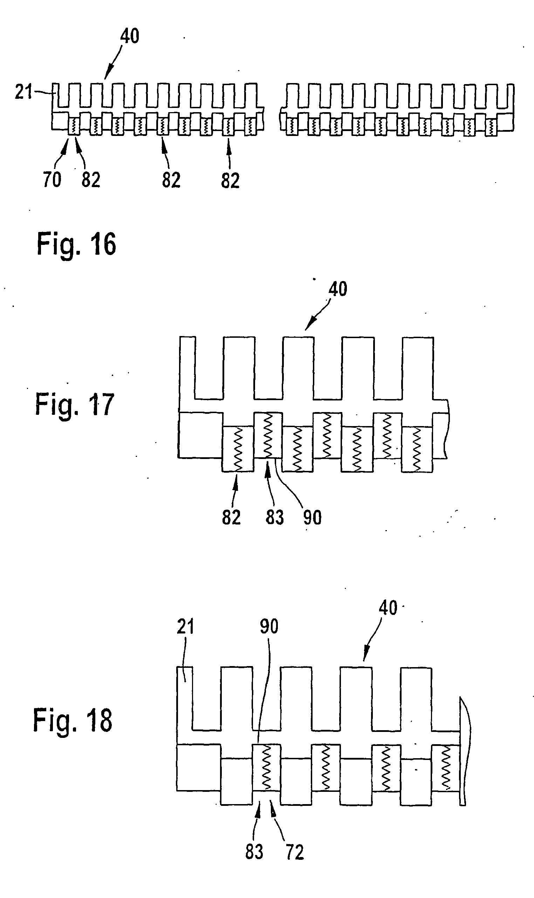

So ist in einer ersten Schweißnahtkombination vorgesehen, dass die miteinander paketierten Lamellen 21 an der Postion eines jeden Außenzahns 70 über die gesamte axiale Breite eines Lamellenpakets 40 über eine Außenzahnschweißnaht 82 miteinander verschweißt sind, Figur 16

In einer zweiten Schweißnahtkombination ist vorgesehen, dass auch die Außennuten 72 über die gesamte axiale Breite eines Lamellenpakets 40 miteinander verschweißt sind, Figur 17

In einer dritten Schweißnahtkombination ist vorgesehen, dass nur die Außennuten 72 über die gesamte axiale Breite eines Lamellenpakets 40 im Nutgrund 90 miteinander verschweißt sind, Figur 18

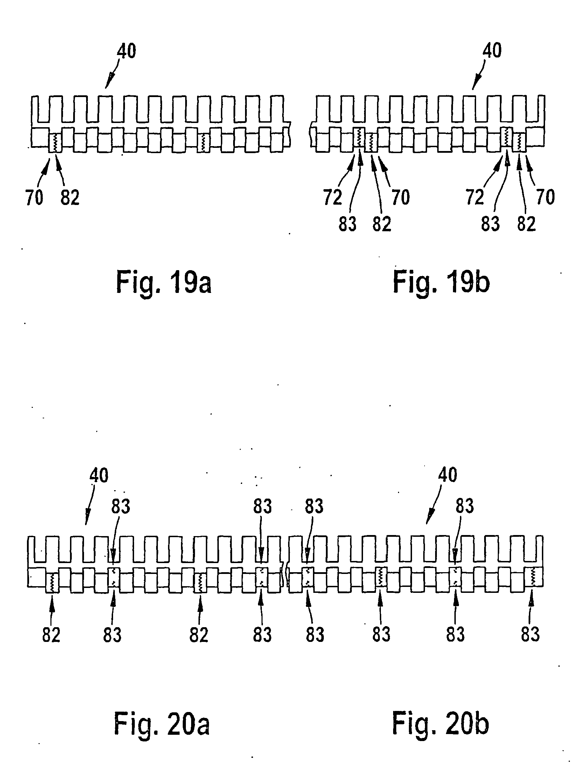

In einer vierten Schweißnahtkombination ist vorgesehen, dass nur ein Bruchteil der Außenzähne 70 und Außennuten 72, vor allem jeder sechste Außenzahn 70 und/oder jede sechste Außennut 72 über die gesamte axiale Breite eines Lamellenpakets 40 miteinander verschweißt sind, Figur 19a und Figur 19b.

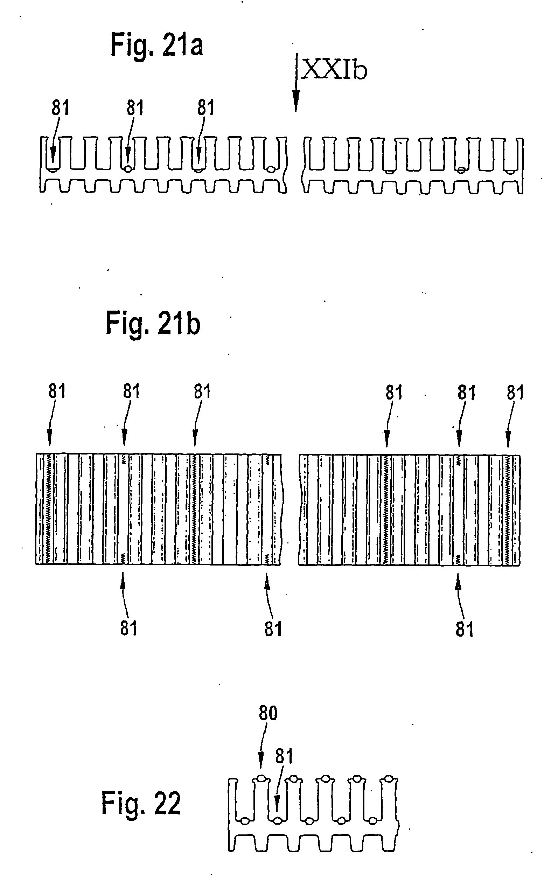

In einer fünften Schweißnahtkombination ist vorgesehen, dass zwischen einzelnen, alle Lamellen 21 verbindenden Schweißnähten zusätzliche Schweißnähte vorgesehen sind, ganz besonders als Außennutschweißnähte 83, die von einer axialen Stirnfläche 46 ausgehend in axialer Richtung lediglich bis zu 20 Lamellen 21 miteinander verbinden, Figur 20a und Figur 20b. Es ist dabei vorgesehen, dass diese kurzen zusätzlichen Schweißnähte 83 von beiden axialen Stirnflächen 46 des Lamellenpakets 40 ausgehen. Besonders bevorzugt wird eine Kombination, bei der einerseits in jede sechste Nut 42 eine Nutgrundschweißnaht 81 gesetzt ist, die alle Lamellen 21 über die axiale Breite des Lamellenpakets 40 verbindet, bspw. angefangen in einer ersten Nut, dann in einer siebten Nut bis schließlich zur 36. oder 48. Nut, und andererseits zwischen diesen Schweißnähten in Nuten 42 kurze zusätzliche Schweißnähte 83 von beiden axialen Stirnflächen 46 des Lamellenpakets 40 ausgehen. Es wird dabei eine mittige Lage zwischen den durchgehenden Schweißnähten 81 bevorzugt, s. a. Figur 21a und Figur 21b.

Während es für Lamellenpakete 40 mit Lamellen 21 in einer Materialstärke von 1,0 mm nicht erforderlich ist, zusätzliche kurze Schweißnähte 83 zur Versteifung anzuordnen, so hat sich herausgestellt, dass bei Lamellenpaketen 40 aus Lamellen 21 mit einer Materialstärke von 0,65 mm mindestens drei Lamellen 21 miteinander zu verbinden sind. Bei Lamellen 21 in einer Materialstärke von 0,5 mm sind mindestens vier Lamellen miteinander zu verbinden, während bei einer Materialstärke von 0,35 mm mindestens sechs Lamellen 21 zu verbinden sind.

In einer sechsten Schweißnahtkombination ist vorgesehen, dass auf den Zahnköpfen 29 der Zähne 24 Zahnkopfschweißnähte 80 vorgesehen sind, die die Lamellen 21 über die gesamte axiale Breite eines Lamellenpakets 40 miteinander verbinden. Figur 22. Die Zahnkopfschweißnähte 80 sind in Umfangsrichtung gesehen vorzugsweise in der Zahnmitte.

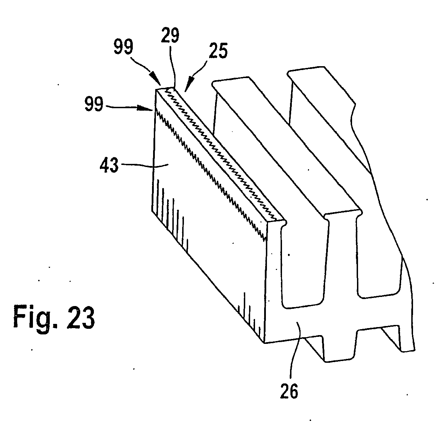

In einer siebten Schweißnahtkombination ist vorgesehen, dass die Halbzähne 25 mittels Halbzahnschweißnähten 99 über die gesamte axiale Breite eines Lamellenpakets 40 miteinander verbunden sind, Figur 23. Hierzu sind diese Halbzahnschweißnähte 99 an den Stirnenden 43 und/oder auf den Zahnköpfen 29 der Halbzähne 25 vorgesehen. Die Halbzahnschweißnähte 99 an den Stirnenden 43 sind bevorzugt auf der dem Joch 26 abgewandten Hälfte des Halbzahn 25 angeordnet.

Den erfindungsgemäßen Ständer könnte man beispielsweise dadurch beschreiben, dass hier ein Ständer für eine elektrische Maschine, insbesondere für einen Generator für Kraftfahrzeuge vorgesehen ist, der ein Ständereisen aus rundgebogenen, streifenförmigen Lamellen 21 aufweist, das axiale Stirnflächen 46 hat, wobei das Ständereisen an den Stirnflächen 46 in axialer Richtung plastisch verformt ist.

Man kann auch eine andere Formulierung für den erfindungsgemäßen Ständer finden, wonach ein Ständer für eine elektrische Maschine, insbesondere ein Generator für Kraftfahrzeuge, vorgesehen ist, der ein Ständereisen aus rundgebogenen, streifenförmigen Lamellen 21 aufweist, welches axiale Stirnflächen 46 aufweist, wobei das Ständereisen an seinem Innendurchmesser eine größere axiale Länge aufweist, als an seinem Außendurchmesser. Die unterschiedlichen axialen Längen sind durch einen Verformungsvorgang erzeugt, der die Lamellen 21 plastisch verformt.

Alle Konturen der in den Figuren zu dieser Beschreibung gezeigten Darstellungen sind nur symbolhaft dargestellt.

## Patentansprüche

1. Verfahren zum Herstellen eines Ständerkerns (20) für eine elektrische Maschine, wobei aus streifenförmigen Lamellen (21) zunächst ein im Wesentlichen quaderförmiges Lamellenpaket (40) gebildet wird, welches in einem der folgenden Schritte durch Rundbiegen in eine Ringform umgeformt wird, die eine Axialrichtung (a) hat, die einer Zylinderachse (z) entspricht, wobei die Ringform axiale Stirnflächen (46) aufweist, **dadurch gekennzeichnet, dass** in einem weiteren der folgenden Schritte das ringfönnige Lamellenpaket (40) am Außenumfang zumindest stellenweise an den axialen Stirnflächen (46) in Axialrichtung (a) plastisch verformt wird.

2. Verfahren nach Anspruch 1, **dadurch gekennzeichnet, dass** durch die plastische Verformung der Stirnflächen (46) in Axialrichtung an den beiden axialen Enden des ringförmigen Lamellenpakets (40) axiale Spannflächen (53) angeformt werden.

3. Verfahren nach Anspruch 1 oder 2, **dadurch gekennzeichnet, dass** das ringförmige Lamellenpaket(40) gleichzeitig an dessen Außenumfang in radiale Richtung gepresst und **dadurch** plastisch verformt wird.

4. Verfahren nach Anspruch 3, **dadurch gekennzeichnet, dass** durch die plastische Verformung des Außenumfangs des Lamellenpakets (40) am Lamellenpaket ein radialer Gehäuseeinpass (54) gebildet wird.

5. Verfahren nach einem der vorhergehenden Ansprüche, **dadurch gekennzeichnet, dass** die plastische Verformung des Lamellenpakets gleichzeitig am Lamellenpaket eine Fügefase (55) angeformt wird.

6. Verfahren nach einem der vorhergehenden Anspruch, **dadurch gekennzeichnet, dass** die Lamellen (21) eine Stärke zwischen 0.35 mm und 1 mm aufweisen, wobei eine Stärke von 0,5 mm bevorzugt wird und alle Lamellen (21) vorzugsweise die gleiche Materialstärke (s) aufweisen.

7. Verfahren nach einem der vorhergehenden Ansprüche, **dadurch gekennzeichnet, dass** eine Anzahl von n Lamellen eines Lamellenpaketes (40) in diesem in der gleichen Reihenfolge angeordnet wird, wie diese in einem Stanzwerkzeug erzeugt werden.

8. Verfahren nach einem der vorhergehenden Ansprüche, **dadurch gekennzeichnet, dass** vor dem Ausstanzen der Lamellen (21) aus einem Lamellenblechhalbzeug dessen Materialstärke (s) mittels einer Messvorrichtung (M) ermittelt wird und ausgehend von einer mit einer Toleranz versehenen Sollbreite des im Wesentlichen quaderförmigen Lamellenpakets (40) die Sollanzahl der Lamellen.(21) für das im Wesentlichen quaderförmigen Lamellenpaket (40) ermittelt wird.

9. Verfahren nach einem der Ansprüche 7 oder 8, **dadurch gekennzeichnet, dass** das Lamellenpaket (40) in zumindest zwei Teillamellenpakete (58) aufgeteilt und diese so zu einem Lamellenpaket (40) zusammengesetzt werden, dass an einer inneren Fügestelle (65) Stanzgrate (57) benachbarter Lamellen (21) voneinander wegweisen.

10. Verfahren nach einem der Ansprüche 7 bis 9, **dadurch gekennzeichnet, dass** die noch einzelnen Lamellen (21) gereinigt werden und die Sollanzahl von Lamelle (21) zu einem spaltfreien Lamellenpaket (40) geschichtet, genau ausgerichtet und unter Beaufschlagung mit einer Kraft gegeneinander gepresst werden, um anschließend die Lamellen (21) durch eine Verbindungstechnik miteinander zu verbinden, vorzugsweise durch Schweißen.

11. Verfahren nach einem der vorstehenden Anprüche, **dadurch gekennzeichnet, dass** nach axial außen gerichtete Stanzgrate (57) der Lamellen (21) beseitigt werden.

12. Verfahren nach einem der vorhergehenden Ansprüche, **dadurch gekennzeichnet, dass** das Rundbiegen unter einer axialen Vorspannung des Lamellenpakets (40) erfolgt.

13. Verfahren nach einem der vorhergehenden Ansprüche, **dadurch gekennzeichnet, dass** das im Wesentlichen quaderförmige Lamellenpaket (40) zwei Stirnenden 43 aufweist, die nach dem Rundbiegen unter axialer Vorspannung des Lamellenpakets (40) miteinander verbunden werden.

14. Verfahren nach einem der vorhergehenden Ansprüche, **dadurch gekennzeichnet, dass** die Verringerung der axialen Länge am Außenumfang des ringförmigen Lamellenpakets (40) durch den axialen Umformungsschritt zwischen 1% und 10% beträgt.

15. Verfahren nach einem der vorhergehenden Ansprüche, **dadurch gekennzeichnet, dass** auf den Zahnköpfen (29) der Halbzähne (25) und/oder an den Stirnenden (43) der Halbzähne (25) Halbzahnschweißnähte (99) angebracht werden.

16. Verfahren nach einem der vorhergehenden Ansprüche, **dadurch gekennzeichnet, dass** Schweißnähte (81, 83) angebracht werden, die von einer axialen Stirnfläche (46) ausgehend in axialer Richtung lediglich bis zu zwanzig Lamellen (21) miteinander verbinden.

17. Verfahren nach einem der vorhergehenden Ansprüche, **dadurch gekennzeichnet, dass** vor dem Rundbiegen eine Ständerwicklung (60) in das im Wesentlichen quaderförmige Lamellenpaket eingelegt wird.

18. Ständer für eine elektrische Maschine, insbesondere Generator für Kraftfahrzeuge, mit einem Ständereisen aus rundgebogenen streifenförmigen Lamellen (21), das axiale Stirnflächen (46) aufweist, **dadurch gekennzeichnet, dass** das Ständereisen zumindest stellenweise an den axialen Stirnflächen (46) in axialer Richtung (a) plastisch verformt ist, so
das Ständereisen an seinem Innendurchmesser eine größere axiale Länge aufweist, als an seinem Außendurchmesser.

## Claims

1. Method for producing a stator core (20) for an electrical machine, with a substantially cuboidal lamination stack (40) first being formed from strip-like laminations (21) and being worked into a ring shape by being bent in a circle in one of the following steps, the said ring shape having an axial direction (a) which corresponds to a cylinder axis (z), with the ring shape having axial end faces (46), **characterized in that** the ring-like lamination stack (40) is plastically deformed in the axial direction (a) at the outer circumference at least at points on the axial end faces (46) in a further one of the following steps.

2. Method according to Claim 1, **characterized in that** axial clamping faces (53) are integrally formed at the two axial ends of the ring-like lamination stack (40) by the plastic deformation of the end faces (46) in the axial direction.

3. Method according to Claim 1 or 2, **characterized in that** the ring-like lamination stack (40) is simultaneously pressed, and thus plastically deformed, in the radial direction at its outer circumference.

4. Method according to Claim 3, **characterized in that** a radial housing recess (54) is formed on the lamination stack by the plastic deformation of the outer circumference of the lamination stack (40).

5. Method according to one of the preceding claims, **characterized in that** an attachment bevel (55) is simultaneously integrally formed on the lamination stack by the plastic deformation of the lamination stack.

6. Method according to one of the preceding claims, **characterized in that** the laminations (21) have a thickness of between 0.35 mm and 1 mm, with a thickness of 0.5 mm being preferred and all the laminations (21) preferably having the same material thickness (s).

7. Method according to one of the preceding claims, **characterized in that** a number of n laminations of a lamination stack (40) is arranged in the said lamination stack in the same order in which the said laminations are produced in a stamping die.

8. Method according to one of the preceding claims, **characterized in that**, before the laminations (21) are stamped out of a semi-finished lamination sheet, the material thickness (s) of the said semi-finished lamination sheet is determined by means of a measuring apparatus (M) and the setpoint number of laminations (21) for the substantially cuboidal lamination stack (40) is determined on the basis of a setpoint width, which is provided with a tolerance, of the substantially cuboidal lamination stack (40).

9. Method according to either of Claims 7 and 8, **characterized in that** the lamination stack (40) is divided into at least two component lamination stacks (58) and these component lamination stacks are combined to form a lamination stack (40) such that stamping burrs (57) of adjacent laminations (21) point away from one another at an inner attachment point (65).

10. Method according to one of Claims 7 to 9, **characterized in that** the still individual laminations (21) are cleaned and the setpoint number of laminations (21) are layered, precisely aligned and pressed against one another under the action of a force to form a gap-free lamination stack (40), in order to then connect the laminations (21) to one another by a connection technique, preferably by welding.

11. Method according to one of the preceding claims, **characterized in that** stamping burrs (57) of the laminations (21), which stamping burrs are directed axially outwards, are removed.

12. Method according to one of the preceding claims, **characterized in that** the lamination stack (40) is bent in a circle with the said lamination stack being under axial prestress.

13. Method according to one of the preceding claims, **characterized in that** the substantially cuboidal lamination stack (40) has two ends (43) which are connected to one another after the lamination stack (40) is bent in a circle with the said lamination stack being under axial prestress.

14. Method according to one of the preceding claims, **characterized in that** the reduction in the axial length at the outer circumference of the ring-like lamination stack (40) by the axial working step is between 1% and 10%.

15. Method according to one of the preceding claims, **characterized in that** half-tooth weld joints (99) are provided on the tooth heads (29) of the half-teeth (25) and/or at the ends (43) of the half-teeth (25).

16. Method according to one of the preceding claims, **characterized in that** weld joints (81, 83) are provided which, starting from an axial end face (46), connect only up to twenty laminations (21) to one another in the axial direction.

17. Method according to one of the preceding claims, **characterized in that** a stator winding (60) is inserted into the substantially cuboidal lamination stack before the lamination stack is bent in a circle.

18. Stator for an electrical machine, in particular a generator for motor vehicles, having an iron stator core comprising strip-like laminations (21) which are bent in a circle, the said iron stator core having axial end faces (46), **characterized in that** the iron stator core is plastically deformed in the axial direction (a) at least at points on the axial end faces (46), and therefore the iron stator core has a greater axial length at its inside diameter than at its outside diameter.

## Revendications

1. Procédé de fabrication d'une âme de stator (20) pour une machine électrique, dans lequel un paquet (40) de lamelles essentiellement en forme de parallélépipède est formé et dans l'une des étapes qui suit est converti par cintrage circulaire en une forme annulaire dont la direction axiale (a) correspond à un axe (z) de cylindre, la forme annulaire présentant des surfaces frontales axiales (46),
**caractérisé en ce que**
dans une autre des étapes qui suivent, au moins certains emplacements de la périphérie extérieure des surfaces frontales axiales (46) du paquet (40) de lamelles de forme annulaire sont déformés plastiquement dans la direction axiale (a).

2. Procédé selon la revendication 1, **caractérisé en ce que** la déformation plastique des surfaces frontales (46) dans la direction axiale forme des surfaces axiales de serrage (53) aux deux extrémités axiales du paquet (40) de lamelles de forme annulaire.

3. Procédé selon la revendication 1 ou 2, **caractérisé en ce que** le paquet (40) de lamelles de forme annulaire est en même temps comprimé dans la direction radiale sur sa périphérie extérieure et ainsi déformé plastiquement.

4. Procédé selon la revendication 3, **caractérisé en ce que** la déformation de la périphérie extérieure du paquet (40) de lamelles forme sur le paquet de lamelles un ajustement radial (54) au boîtier.

5. Procédé selon l'une des revendications précédentes, **caractérisé en ce que** la déformation plastique du paquet de lamelles forme en même temps un chanfrein de jonction (55) sur le paquet de lamelles.

6. Procédé selon l'une des revendications précédentes, **caractérisé en ce que** les lamelles (21) présentent une épaisseur comprise entre 0,35 mm et 1 mm, une épaisseur de 0,5 mm étant préférée, et **en ce que** toutes les lamelles (21) présentent de préférence la même épaisseur de matière.

7. Procédé selon l'une des revendications précédentes, **caractérisé en ce qu'**un nombre n de lamelles d'un paquet (40) de lamelles est disposé dans ce dernier dans le même ordre que celle de leur formation dans un outil d'estampage.

8. Procédé selon l'une des revendications précédentes, **caractérisé en ce qu'**avant l'estampage des lamelles (21) dans une tôle semi-finie à lamelles dont l'épaisseur de matière (s) est déterminée au moyen d'un dispositif de mesure (M) et le nombre de consigne des lamelles (21) pour le paquet (40) de lamelles essentiellement en forme de parallélépipède est déterminé à partir d'une largeur de consigne affectée d'une tolérance du paquet (40) de lamelles essentiellement en forme de parallélépipède.

9. Procédé selon l'une des revendications 7 et 8, **caractérisé en ce que** le paquet (40) de lamelles est divisé en au moins deux paquets partiels (58) de lamelles et **en ce que** ces derniers sont assemblés pour former un paquet (40) de lamelles de telle sorte que les barbes d'estampage (57) de lamelles voisines (21) s'éloignent l'une de l'autre en un emplacement intérieur de jonction (65).

10. Procédé selon l'une des revendications 7 à 9, **caractérisé en ce que** les lamelles (21) encore séparées sont nettoyées et **en ce que** le nombre de consigne de lamelles (21) est empilé pour former un paquet (40) de lamelles exempt de jeu et est orienté avec précision, et **en ce que** les lamelles sont repoussées les unes contre les autres en appliquant une force, avant de relier les lamelles (21) les unes aux autres par une technique de liaison, de préférence par soudage.

11. Procédé selon l'une des revendications précédentes, **caractérisé en ce que** les barbes d'estampage (57) dirigées vers l'extérieur des lamelles (21) sont éliminées.

12. Procédé selon l'une des revendications précédentes, **caractérisé en ce que** le cintrage circulaire s'effectue sous précontrainte axiale du paquet (40) de lamelles.

13. Procédé selon l'une des revendications précédentes, **caractérisé en ce que** le paquet (40) de lamelles essentiellement en forme de parallélépipède présente deux extrémités frontales (43) qui sont reliées l'une à l'autre après le cintrage circulaire sous précontrainte axiale du paquet (40) de lamelles.

14. Procédé selon l'une des revendications précédentes, **caractérisé en ce que** la diminution de la longueur axiale à la périphérie extérieure du paquet (40) de lamelles de forme annulaire due à l'étape de déformation axiale est comprise entre 1 % et 10 %.

15. Procédé selon l'une des revendications précédentes, **caractérisé en ce que** des cordons de soudure (99) en demi-dents sont ménagés sur les têtes (29) des demi-dents (25) et/ou sur les extrémités frontales (43) des demi-dents (25).

16. Procédé selon l'une des revendications précédentes, **caractérisé en ce que** l'on applique des cordons de soudure (81, 83) qui relient seulement les unes aux autres jusqu'à vingt lamelles (21) dans la direction axiale en partant d'une surface frontale axiale (46).

17. Procédé selon l'une des revendications précédentes, **caractérisé en ce qu'**avant le cintrage circulaire, un enroulement de stator (60) est inséré dans le paquet de lamelles essentiellement en forme de parallélépipède.

18. Stator pour machine électrique, en particulier génératrice pour véhicules automobiles, doté d'un fer de stator constitué de lamelles (21) en forme de ruban cintrées circulairement, le fer de stator présentant des surfaces frontales axiales (46),
**caractérisé en ce que**
au moins certains emplacements des surfaces frontales axiales (46) du fer de stator sont déformés plastiquement dans la direction axiale (a) de telle sorte que le fer de stator présente sur son diamètre intérieur une longueur axiale plus grande que celle sur son diamètre extérieur.
